# EUROPEAN PATENT APPLICATION

(11) **EP 4 064 162 A1**
(43) Date of publication of application: **28.09.2022**
(21) Application number: 22155868.7
(22) Date of filing: 09.02.2022
(51) Int. Cl.: G06Q 20/18, G06Q 20/20, G06Q 20/40, G07G 1/00

(54) **INFORMATION PROCESSING SYSTEM, INFORMATION PROCESSING METHOD, AND NON-TRANSITORY COMPUTER READABLE MEDIUM**

(30) Priority: 24.03.2021 JP 2021050277
(71) Applicant: Toshiba TEC Kabushiki Kaisha, Tokyo 141-8562 (JP)
(72) Inventor: Hamada, Kentaro, Tokyo 141-8562 (JP)
(74) Representative: Hoffmann Eitle

(57) **Abstract**

A point of sales (POS) system includes a terminal configured to, upon scanning of a commodity, acquire a code thereof, a server configured to, upon receipt of the code, register the code in association with a preset weight of the commodity, and a scale configured to measure a total weight of commodities in a cart. The terminal is configured to detect a decrease in the total weight and transmit an amount of the decrease to the server. The server is configured to, upon receipt of the amount, determine whether a commodity code associated with a matching weight value is already registered, and upon determining that the commodity code is already registered, issue a command that causes the terminal to display a screen through which inputs can be made for indicating that the commodity has been taken out or cancelling the registration of the removed commodity.

## Description

### CROSS-REFERENCE TO RELATED APPLICATION

This application is based upon and claims the benefit of priority from Japanese Patent Application No. 2021-050277, filed March 24, 2021, the entire contents of which are incorporated herein by reference.

### FIELD

Embodiments described herein relate generally to an information processing system, an information processing method, and a non-transitory computer readable medium.

### BACKGROUND

In recent years, a cart POS (Point Of Sales) system has been proposed for retail stores that use shopping carts. With such a cart POS system, an information terminal including a touch panel and a scanner is attached to each shopping cart. A customer, who is a user of the shopping cart, reads, with the scanner, an identification code of a commodity that the user is about to purchase to perform commodity registration, and then places the now registered commodity in the shopping cart. For such cart POS systems, it has been considered to introduce a scale to weigh items placed in the cart as means of fraudulent act prevention since the user performs the commodity registration acts himself or herself.

For example, the cart POS system might emit a warning if a preset weight for a registered commodity does not match up with a measured weight change between before and after the placement of the registered item on the shopping cart. If the user performs another commodity registration without first performing a cancellation operation by removing the just placed commodity from the shopping cart and cancelling the corresponding item registration, a warning is emitted. Therefore, for example, if a child takes a previously registered commodity from the shopping cart and holds the commodity, a warning would be emitted even though registration was correctly performed for another commodity. There has been a desire to avoid such a situation of issuing warnings when only innocent behaviors have been performed.

### SUMMARY OF THE INVENTION

One of the objects of the present invention is to improve prior art techniques and overcome at least some of the prior art problems as for instance above illustrated.

According to a first aspect of the present invention, it is provided a point of sales (POS) system, comprising a POS terminal configured to scan a commodity and acquire a commodity code from the commodity by the scanning; a POS server configured to receive the commodity code from the POS terminal and register the commodity code in a memory in association with a preset weight for the commodity; and a scale configured to measure a total weight of commodities in a shopping cart, wherein the POS terminal is connected to the scale and configured to detect a decrease in the total weight and transmit an amount of the decrease to the POS server, and the POS server is further configured to upon receipt of the amount of the decrease, determine whether a matching commodity code associated with a weight that is substantially identical to the amount of the decrease is already registered in the memory, and upon determining that the matching commodity code is already registered, issue a first command that causes the POS terminal to display a first screen through which a user can input either a first input indicating that the commodity corresponding to the matching commodity code has been taken out from the shopping cart or a second input indicating that the registration of the commodity corresponding to the matching commodity code is to be cancelled.

Optionally, in the POS system according to the first aspect of the invention, the POS server is further configured to, upon receipt of the first input, issue a second command that causes the POS terminal to display a second screen indicating that the commodity corresponding to the matching commodity code has been taken out of the shopping cart.

Optionally, in the POS system according to the first aspect of the invention, the POS server is further configured to, upon receipt of the first input, store in the memory a flag indicating that the commodity corresponding to the matching commodity code has been taken out from the shopping cart.

Optionally, in the POS system according to the first aspect of the invention, the POS terminal is further configured to receive a third input for starting checkout processing, and the POS server is further configured to, upon receipt of the third input, when the flag is stored in the memory, issue a third command that causes the POS terminal to display a third screen including a checkout code for the checkout processing and a message indicating that the checkout processing should be performed through a checkout machine that is operated by a store clerk.

Optionally, in the POS system according to the first aspect of the invention, the POS server is further configured to, upon receipt of the third input, when the flag is not stored in the memory, issue a fourth command that causes the POS terminal to display a fourth screen including the checkout code without the message.

Optionally, in the POS system according to the first aspect of the invention, the POS server is further configured to, upon receipt of the second input, cancel the registration of the commodity corresponding to the matching commodity code.

Optionally, in the POS system according to the first aspect of the invention, the POS server is further configured to, after cancelling the registration of the commodity corresponding to the matching commodity code, issuing a fifth command that causes the POS terminal to display a fifth screen indicating that the registration has been cancelled.

Optionally, in the POS system according to the first aspect of the invention, the POS terminal is further configured to, when a commodity code of a commodity is registered, display a commodity name, a unit price, a quantity, and a purchase amount of the commodity.

Optionally, in the POS system according to the first aspect of the invention, the POS terminal is further configured to, when a registered commodity is taken out from the shopping cart, display an image that identifies the registered commodity removed from the shopping cart.

Optionally, in the POS system according to the first aspect of the invention, the POS terminal is further configured to, when the registered commodity is cancelled, display a line over the commodity name, the unit price, the quantity, and the purchase amount of the commodity.

Optionally, in the POS system according to the first aspect of the invention, the POS terminal is attached to the shopping cart.

Optionally, the POS system according to the first aspect of the invention further comprises a scanner attached to a handle bar of the shopping cart.

According to a second aspect of the invention, it is provided a commodity registration method for a point of sales (POS) system including a POS terminal and a POS server, the method comprising acquiring a commodity code from scanning of a commodity at a POS terminal; transmitting the commodity code from the POS terminal to a POS server; upon receipt of the commodity code by the POS server, registering the commodity code in a memory in association with a preset weight for the commodity; measuring a total weight of commodities in a shopping cart using a scale mounted on the shopping cart; detecting a decrease in the total weight and an amount of the decrease; transmitting the amount of the decrease in the total weight to the POS server from the POS terminal; upon receipt of the amount of the decrease by the POS server, determining whether a matching commodity code associated with a weight that is substantially identical to the amount of the decrease is already registered in the memory; and upon determining that the matching commodity code is registered, issuing a first command that causes the POS terminal to display a first screen permitting a user to input either a first input indicating that the commodity corresponding to the matching commodity code has been taken out from the shopping cart or a second input indicating that the registration of the commodity corresponding to the matching commodity code is to be cancelled.

Optionally, the commodity registration method according to the second aspect of the invention further comprises upon receipt of the first input, by the POS server, issuing a second command that causes the POS terminal to display a second screen indicating that the commodity corresponding to the matching commodity code has been taken out.

Optionally, the commodity registration method according to the second aspect of the invention further comprises upon receipt of the first input, by the POS server, storing in the memory a flag indicating that the commodity corresponding to the matching commodity code has been taken out.

Optionally, the commodity registration method according to the second aspect of the invention further comprises receiving, at the POS terminal, a third input for starting checkout processing; and upon receipt of the third input, when the flag is stored in the memory, issuing a third command from the POS server that causes the POS terminal to display a third screen including a checkout code for the checkout processing and a message indicating that the checkout processing should be performed through a checkout machine that is operated by a store clerk.

Optionally, the commodity registration method according to the second aspect of the invention further comprises upon receipt of the third input, when the flag is not stored in the memory, issuing a fourth command from the POS server that causes the POS terminal to display a fourth screen including the checkout code without the message.

Optionally, the commodity registration method according to the second aspect of the invention further comprises upon receipt of the second input at the POS server, cancelling the registration of the commodity corresponding to the matching commodity code.

Optionally, the commodity registration method according to the second aspect of the invention further comprises after cancelling the registration of the commodity corresponding to the matching commodity code, issuing a fifth command from the POS server that causes the POS terminal to display a fifth screen indicating that the registration of the commodity corresponding to the matching commodity code has been cancelled.

According to a third aspect of the present invention, it is provided a non-transitory computer readable medium storing program instructions for causing a point of sales (POS) system including a POS server and a POS terminal to execute a commodity registration method comprising acquiring a commodity code of a commodity at a POS terminal; transmitting the commodity code to the POS server from a POS terminal; upon receipt of the commodity code at the POS server, registering in a memory the commodity code in association with a preset weight of the commodity; measuring a total weight of commodities in a shopping cart by a scale; detecting a decrease in the total weight at the POS terminal; transmitting an amount of the decrease to the POS server from the POS terminal; upon receipt of the amount of the decrease at the POS server, determining whether a matching commodity code associated with a weight that is substantially identical with the amount of the decrease is already registered in the memory; and upon determining that the matching commodity code is already registered, issuing a first command that causes the POS terminal to display a first screen through which a user can input either a first input indicating that the commodity corresponding to the matching commodity code has been taken out from the shopping cart or a second input indicating that the registration of the commodity corresponding to the matching commodity code is to be cancelled.

### BRIEF DESCRIPTION OF THE DRAWINGS

FIG. 1 is a schematic diagram illustrating an information processing system according to an embodiment.
FIG. 2 is a hardware block diagram of an information terminal.
FIG. 3 is a perspective view illustrating a shopping cart in which an information terminal is provided.
FIG. 4 is a hardware block diagram of a virtual POS server.
FIG. 5 depicts a data structure of data stored in a purchase registration memory.
FIG. 6 depicts a data structure of a purchased commodity list.
FIG. 7 through FIG. 10 are each flowcharts of control procedures performed by a processor of an information terminal.
FIG. 11 through FIG. 16 are each flowcharts of control procedures performed by a processor of a virtual POS server.
FIG. 17 is a schematic diagram illustrating an example of a purchase registration screen displayed by an information terminal.
FIG. 18 is a schematic diagram illustrating an example of a selection screen displayed by an information terminal.
FIG. 19 is a schematic diagram illustrating an example of a purchase registration screen on which take-out of a purchased commodity is notified and displayed by an information terminal.
FIG. 20 is a schematic diagram illustrating an example of a purchase registration screen on which registration cancellation of a purchased commodity is notified and displayed by an information terminal.
FIG. 21 is a schematic diagram illustrating an example of a store clerk check screen displayed by an information terminal.

### DETAILED DESCRIPTION

Embodiments provide an information processing system, a control program for performing a method on an information processing system, and an information processing method that can appropriately take fraud reduction measures when a registered commodity is taken out from a shopping cart.

In general, according to one embodiment, a point of sales (POS) system includes a POS terminal configured to, upon scanning of a commodity, acquire a commodity code thereof, a POS server configured to, upon receipt of the commodity code acquired by the POS terminal, register in a memory the commodity code in association with a preset weight of the commodity, and a scale configured to measure a total weight of commodities in a shopping cart. The POS terminal is connected to the scale and further configured to detect a decrease in the total weight and transmit an amount of the decrease to the POS server. The POS server is further configured to, upon receipt of the amount of the decrease, determine whether a matching commodity code associated with a weight that is substantially identical with the amount of the decrease is already registered in the memory. The POS server is further configured to, upon determining that the matching commodity code is already registered, issue a first command that causes the POS terminal to display a first screen through which a user can input either a first input indicating that the commodity corresponding to the matching commodity code has been taken out from the shopping cart or a second input indicating that the registration of the commodity corresponding to the matching commodity code is to be cancelled.

Certain example embodiments are explained below with reference to the drawings.

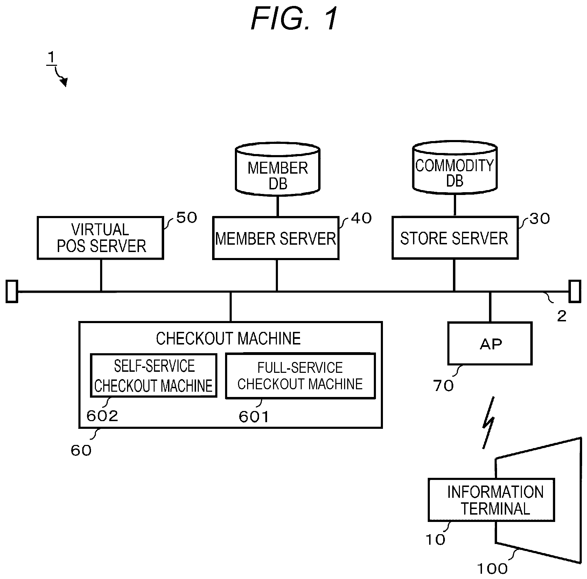

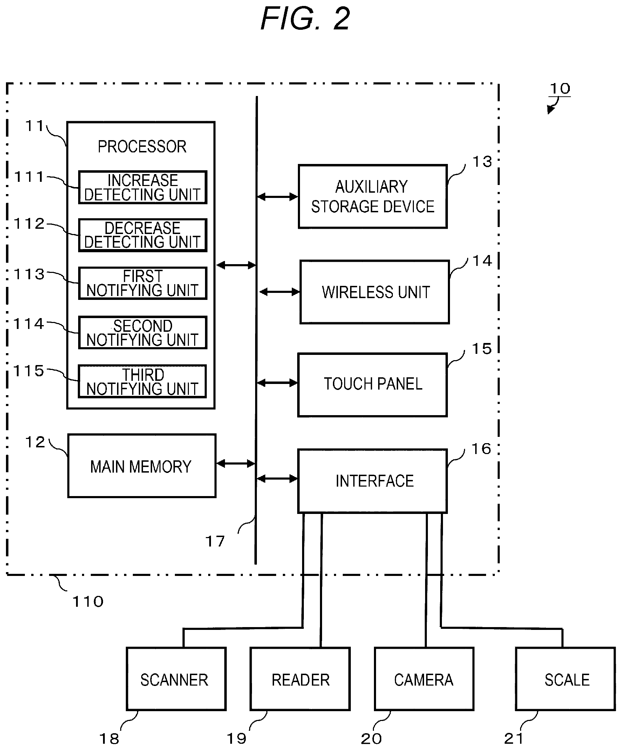

FIG. 1 is a schematic diagram illustrating an information processing system 1 according to an embodiment.
The information processing system 1 is a POS system that includes an information terminal 10, a store server 30, a member server 40, a virtual POS server 50, a checkout machine 60, and an access point 70. The store server 30, the member server 40, the virtual POS server 50, the checkout machine 60, and the access point 70 are connected to a network 2 such as a LAN (Local Area Network). The information terminal 10 includes a wireless unit 14 (see FIG. 2) . The information terminal 10 performs wireless communication with the access point 70. The access point 70 relays communication between the devices connected to the network 2, that is, the store server 30, the member server 40, the virtual POS server 50, and the checkout machine 60 and the information terminal 10. Only one access point 70 is illustrated in FIG. 1 . However, two or more access points 70 may be present depending on the size and the like of a store.

The information terminal 10 is a mobile POS terminal that enables a user to input, by himself or herself, data relating to registration of a commodity that the user is about to purchase (hereinafter referred to as a purchased commodity). The information terminal 10 is provided on a shopping cart 100. In the following explanation, the shopping cart 100 is simply referred to as a cart 100. Information terminals 10 are provided on a plurality of carts 100. The cart 100 is a conveying body that conveys commodities purchased by a user of the cart 100.

The store server 30 manages a commodity database. The commodity database stores a plurality of commodity data records for storing data of commodities sold in the store. Each commodity data record stores items such as a commodity code, a commodity name, a unit price, and a set weight (an expected weight value for each item). The commodity code is commodity identification data set for identifying the commodity. All the commodities sold in the store have their own commodity codes . The unit price is a unit price of the commodity. The set weight (preset weight) is a weight corresponding to an average weight of the particular commodity.

The member server 40 manages a member database. The member database stores a plurality of member data records for storing member data for members of the store. Each member data record stores items such as a member ID, a name, sex, and a mail address. The member ID is an identification code of each member.

The virtual POS server 50 cooperates with the information terminal 10 to perform the functions of a POS device.

The checkout machine 60 is a device that enables a store clerk or a customer to perform checkout of purchased commodities. As the checkout machine 60, there are, for example, a checkout machine operated by a store clerk (hereinafter referred to as a full-service checkout machine 601) with which the store clerk inputs information for checkout, and a self-service checkout machine 602 with which the user inputs information for checkout. The number of full-service checkout machines 601 is not particularly limited. The number of self-service checkout machines 602 is also not particularly limited.

FIG. 2 is a hardware block diagram of the information terminal 10. The information terminal 10 includes a tablet terminal 110, a scanner 18, a reader 19, a camera 20, and a scale 21. The tablet terminal 110 is a cart terminal attached to a shopping cart. The tablet terminal 110 includes a processor 11, a main memory 12, an auxiliary storage device 13, a wireless unit 14, a touch panel 15, an interface 16, and a system transmission line 17. The system transmission line 17 is an address bus, a data bus, a control signal line, or the like. In the tablet terminal 110, the processor 11, the main memory 12, the auxiliary storage device 13, the wireless unit 14, the touch panel 15, and the interface 16 are connected to the system transmission line 17. The scanner 18, the reader 19, the camera 20, and the scale 21 are connected to the tablet terminal 110 via the interface 16.

The processor 11 controls each component of the information terminal 10 according to an operating system and/or one or more application programs in order to perform various functions of the information terminal 10. The processor 11 is, for example, a CPU (Central Processing Unit).

The main memory 12 includes a nonvolatile memory region and a volatile memory region. The nonvolatile memory region of the main memory 12 stores the operating system and/or the application programs. The nonvolatile and/or volatile memory regions store data necessary for the processor 11 to execute processing for controlling the components of the information terminal 10. The volatile memory region of the main memory 12 is used as a work area in which data is rewritten as appropriate by the processor 11. The nonvolatile memory region is, for example, a ROM (Read Only Memory) . The volatile memory region is, for example, a RAM (Random Access Memory) .

The auxiliary storage device 13 is, for example, an EEPROM (registered trademark) (Electric Erasable Programmable Read-Only Memory), an HDD (Hard Disc Drive), or an SSD (Solid State Drive) . The auxiliary storage device 13 stores data used by the processor 11 in performing various kinds of processing, data generated by the processor 11, or the like. The auxiliary storage device 13 may store the application programs.

The application programs stored in the main memory 12 or the auxiliary storage device 13 include a control program executed by the information terminal 10. A method of installing the control program in the main memory 12 or the auxiliary storage device 13 is not particularly limited. The control program can be installed in the main memory 12 or the auxiliary storage device 13 from a removable recording medium or downloaded by communication via a network. The recording medium may be any form as long as the recording medium can store programs like a CD-ROM, a memory card, or the like and is readable by the information terminal 10.

The wireless unit 14 is a wireless network interface circuit configured to perform wireless communication of data with the access point 70 according to a wireless communication protocol.

The touch panel 15 is a device functioning as both of an input device and a display device of the information terminal 10. The touch panel 15 detects a touch position on a displayed image and outputs information concerning the touch position to the processor 11.

The interface 16 is an interface for communicating with the scanner 18, the reader 19, the camera 20, and the scale 21.

The scanner 18 reads a code symbol such as a barcode or a two-dimensional code attached to or printed on a commodity. A code symbol representing a commodity code of the commodity is attached to the commodity. The scanner 18 outputs data of the read code symbol to the processor 11 via the interface 16. The scanner 18 may be a type for reading the code symbol by scanning laser light or may be a type for reading the code symbol from an image captured by an imaging device.

The reader 19 reads data recorded in a recording medium and outputs the read data to the processor 11 via the interface 16. The reader 19 is a magnetic card reader if the recording medium is a magnetic card. The reader 19 is an IC card reader if the recording medium is a contact type IC card. In the case of a recording medium using an RFID (Radio Frequency Identification) like a non-contact type IC card or a smartphone, an RFID reader is used as the reader 19.

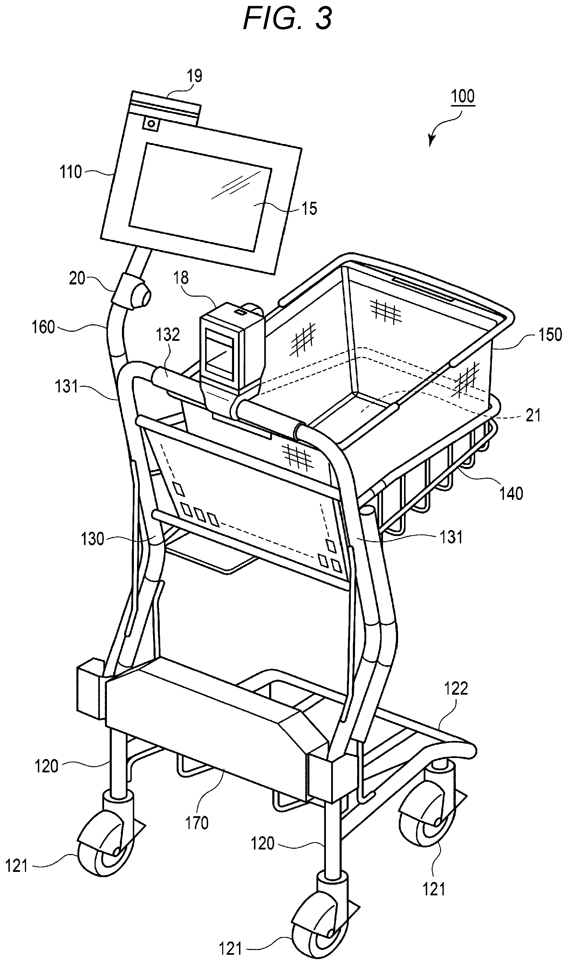

The camera 20 is provided on the cart 100 to be able to photograph, from above, a shopping basket 150 (see FIG. 3) placed on a basket receiving section 140 (see FIG. 3) of the cart 100. The camera 20 is a camera for monitoring whether the user of the cart 100 correctly puts a purchased commodity in the shopping basket 150 . Imaging data output from the camera 20 is output to the processor 11 via the interface 16.

The scale 21 is provided to measure the weights of a purchased commodity and the shopping basket 150 or the like for storing the purchased commodity. The scale 21 measures a total weight of objects placed on the scale 21 and outputs the total weight to the processor 11 via the interface 16 as electronic data.

The processor 11 performs functions of an increase detecting unit 111, a decrease detecting unit 112, a first notifying unit 113, a second notifying unit 114, and a third notifying unit 115. The increase detecting unit 111 performs a function of detecting an increase in a total weight measured by the scale 21.

The decrease detecting unit 112 has a function of detecting a decrease of the total weight measured by the scale 21.

The first notifying unit 113 has a function of, if receiving selection to take out a purchased commodity, which decreases the total weight, notifying of the take-out of the purchased commodity.

The second notifying unit 114 has a function of, if receiving selection to cancel a purchased commodity, which decreases the total weight, notifying of the registration cancellation of the purchased commodity.

The third notifying unit 115 has a function of, if information about the take-out of the purchased commodity is included in an updated purchased commodity list, notifying of checkout to be performed by the full-service checkout machine 601. The purchased commodity list is explained later.

FIG. 3 is a perspective view of the cart 100 on which the information terminal 10 is provided. The cart 100 includes a caster section 120 for movement, a handle frame section 130, and a basket receiving section 140. The caster section 120 includes four casters 121 for smoothly moving the cart 100 on a floor surface. The caster section 120 includes a receiving section 122 for storing a large commodity that cannot be put in a shopping basket 150. The handle frame section 130 includes a pair of vertical frames 131 erected on the rear wheel side of the caster section 120 and a handle bar 132 that couples the upper ends of the vertical frames 131. The basket receiving section 140 is present in front of a halfway part of the handle frame section 130. In the cart 100, a shopping basket 150 provided by the store can be placed on the basket receiving section 140. The shopping basket 150 is a basket for storing commodities. The scale 21 is set in a portion of the basket receiving section 140 on which the shopping basket 150 is placed.

The scanner 18 is present in a halfway part of the handle bar 132. The scanner 18 is attached to the handle bar 132 such that a reading window faces the near side. The near side is a side where the user holding the handle bar 132 and pushing the cart 100 stands.

A pole 160 is attached to one of the vertical frames 131. The distal end of the pole 160 is located above the handle bar 132. The tablet terminal 110 is attached to the distal end portion of the pole 160 with a screen of the touch panel 15 facing the near side. The reader 19 is attached to the tablet terminal 110 such that a card slit faces the near side. In FIG. 3, the reader 19 is a magnetic card reader. The camera 20 is attached to a halfway part of the pole 160 to image, from above, the entire shopping basket 150 placed on the basket receiving section 140.

A battery 170 is attached across the vertical frames 131 on the lower end side of the handle frame section 130. The battery 170 functions as a driving power supply for the tablet terminal 110, the scanner 18, the reader 19, the camera 20, and the scale 21.

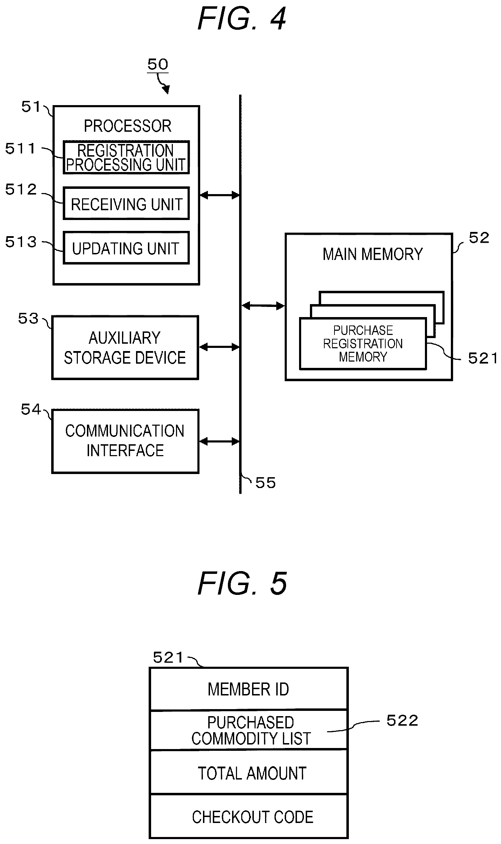

FIG. 4 is a hardware block diagram of the virtual POS server 50. The virtual POS server 50 includes a processor 51, a main memory 52, an auxiliary storage device 53, a communication interface 54, and a system transmission line 55. The system transmission line 55 is an address bus, a data bus, a control signal line, or the like. In the virtual POS server 50, the processor 51, the main memory 52, the auxiliary storage device 53, and the communication interface 54 are connected to the system transmission line 55.

The processor 51 controls the components of the virtual POS server 50 according to an operating system and/or one or more application programs in order to perform various functions of the virtual POS server 50. The processor 51 is, for example, a CPU.

The main memory 52 includes a nonvolatile memory region and a volatile memory region. The nonvolatile memory region of the main memory 52 stores the operating system and/or the application programs. The nonvolatile or volatile memory regions of the main memory 52 store data necessary for the processor 51 to execute processing for controlling the components of the virtual POS server 50. The volatile memory region of the main memory 52 is used as a work area in which data is rewritten as appropriate by the processor 51. The nonvolatile memory region is, for example, a ROM. The volatile memory region is, for example, a RAM.

The auxiliary storage device 53 is, for example, an EEPROM, an HDD, or an SSD. The auxiliary storage device 53 stores data used by the processor 51 in performing various kinds of processing, data generated by processing in the processor 51, or the like. The auxiliary storage device 53 sometimes may store the application programs.

The communication interface 54 is a network interface circuit connectable to the network 2. The communication interface 54 performs, according to a communication protocol, data communication with other devices connected to the network 2.

The virtual POS server 50 having such a configuration uses a part of the volatile memory region of the main memory 52 as a purchase registration memory 521. In the virtual POS server 50, a plurality of purchase registration memories 521 can be formed in the main memory 52.

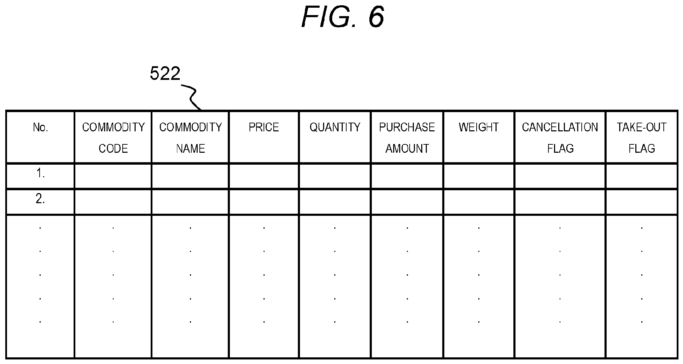

FIG. 5 depicts a data structure of data stored in the purchase registration memory 521. As illustrated in FIG. 5, the purchase registration memory 521 includes regions for storing a member ID, a purchased commodity list 522 (see FIG. 6), a total amount, and a checkout code. The total amount is a total amount of purchased commodities listed in the purchased commodity list 522. The checkout code is explained later. The purchase registration memory 521 is generated in correlation with a member ID that is input to the information terminal 10.

FIG. 6 depicts a data structure of the purchased commodity list 522. As illustrated in FIG. 6, the purchased commodity list 522 includes a plurality of records each associated with a serial number. Each of the records includes a commodity code, a commodity name, a price, a quantity, a purchase amount, weight, a cancellation flag, and a take-out flag of a purchased commodity purchased by the user. The commodity code, the commodity name, the price, the quantity, the purchase amount, the weight, the cancellation flag, the take-out flag, and the like are referred to as purchased commodity data as well. The quantity is the quantity of the commodity identified by the commodity code. The purchase amount is a total of prices based on the quantity of the commodity. The weight is a set weight included in a commodity data record stored in the commodity database. The cancellation flag is flag data for specifying a purchased commodity that is once registered as the purchased commodity but is cancelled thereafter. The cancellation flag is set to "1" if registration of a purchased commodity is cancelled halfway in shopping. The initial state of the cancellation flag is "0". The take-out flag is flag data for specifying a purchased commodity that is once registered as the purchased commodity but is not stored in the shopping basket 150. A purchased commodity might not be stored in the shopping basket 150 if, for example, a child holds the purchased commodity. The take-out flag is set to "1" if take-out of a purchased commodity happens halfway in shopping. The initial state of the take-out flag is "0".

Referring back to FIG. 4, the processor 51 of the virtual POS server 50 performs functions of a registration processing unit 511, a receiving unit 512, and an updating unit 513. The registration processing unit 511 has a function of generating the purchased commodity list 522 and writing the purchased commodity list 522 into the purchase registration memory 521.

The receiving unit 512 has a function of, if the decrease detecting unit 112 detects that the total weight decreases, receiving selection whether to take out the purchased commodity or cancel registration of the purchased commodity.

The updating unit 513 has a function of updating the purchased commodity list 522 based on the information received by the receiving unit 512. The information received by the receiving unit 512 is take-out information about take-out of the purchased commodity or cancellation information about cancellation of registration of the purchased commodity.

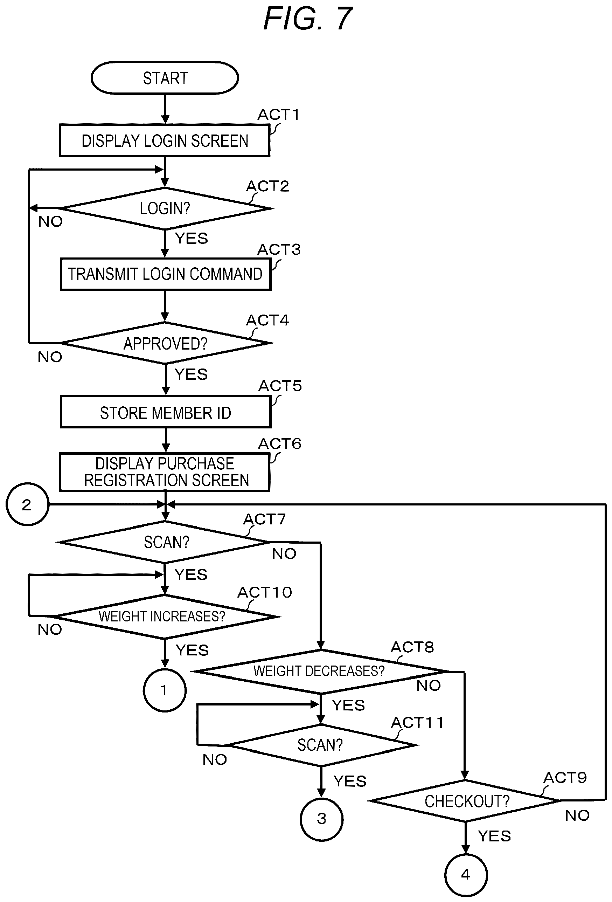

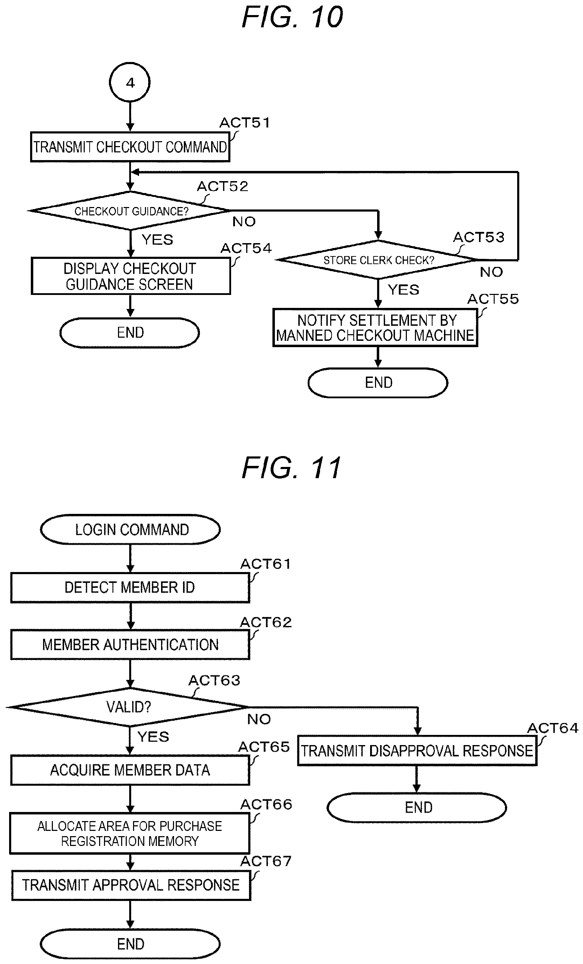

FIGS. 7 to 10 are flowcharts of main control procedures performed by the processor 11 of the information terminal 10 according to a control program. FIGS. 11 to 16 are flowcharts illustrating main control procedures performed by the processor 51 of the virtual POS server 50 according to a control program.

Operations of the information processing system 1 in which a user, who is a member of a customer loyalty program or the like of the store, performs registration of a purchased commodity using the information terminal 10 provided on the cart 100 is explained below. The operation explained below is one example. The operation may be modified in various aspects as long as the same result is obtained.

First, the user doing shopping using the cart 100 touches the touch panel 15. If the touch panel 15 is touched, the processor 11 wakes up from an idle state. The processor 11 starts information processing illustrated in the flowchart of FIG. 7.

In ACT 1, the processor 11 causes the touch panel 15 to display a login screen. The login screen is a screen for instructing a member of the store to perform login operation. The user, who is a member of the store, carries a member card in which a member code of the member is recorded. The user checks the login screen and causes the reader 19 to read data of the member card. If the data of the member card is read by the reader 19, the data of the member card is acquired by the processor 11.

The processor 11, which has caused the touch panel 15 to display the login screen, waits for login in ACT 2. Upon receipt of the data from the reader 19, the processor 11 acquires the member ID recorded in the member card and determines that login is performed. That is, the processor 11 determines YES in ACT 2 and proceeds to ACT 3.

In ACT 3, the processor 11 controls the wireless unit 14 to transmit a login command to the virtual POS server 50. According to this control, the wireless unit 14 wirelessly transmits the login command to the virtual POS server 50. The login command is received by the access point 70 and transmitted to the virtual POS server 50 through the network 2. The login command includes the member ID of the member card read by the reader 19.

Upon receipt of a command from the information terminal 10 via the communication interface 54, the processor 51 of the virtual POS server 50 checks a type of the command. If the received command is the login command, the processor 51 starts command reception processing illustrated in the flowchart of FIG. 11.

In ACT 61, the processor 51 detects the member ID from the login command. In ACT 62, the processor 51 performs authentication of the member identified by the member ID. Specifically, the processor 51 inquires the member server 40 whether a member data record including the member ID is present in the member database. As a result, if a response indicating that the relevant member data record is present in the member database is received from the member server 40, the processor 51 acknowledges that the member authentication is valid. On the other hand, if a response indicating that the relevant member data record is absent in the member database is received from the member server 40, the processor 51 acknowledges that the member authentication is invalid.

In ACT 63, the processor 51 checks a result of the member authentication. If the authentication result is invalid, the processor 51 determines NO in ACT 63 and proceeds to ACT 64. In ACT 64, the processor 51 controls the communication interface 54 to transmit a disapproval response command to the information terminal 10. According to this control, the disapproval response command is transmitted to the information terminal 10 via the communication interface 54. The disapproval response command is wirelessly transmitted from the access point 70 via the network 2 and received by the information terminal 10 that is the login command transmission source. Then, the processor 51 ends the reception processing for the login command.

If the authentication result is valid, the processor 51 determines YES in ACT 63 and proceeds to ACT 65. In ACT 65, the processor 51 requests the member server 40 to transmit member data of the member identified by the member ID and acquires the member data including the member ID from the member server 40.

In ACT 66, the processor 51 allocates an area for the purchase registration memory 521 in the main memory 52. The processor 51 stores the member ID in the purchase registration memory 521.

In ACT 67, the processor 51 controls the communication interface 54 to transmit an approval response command to the information terminal 10. According to this control, the approval response command is transmitted to the information terminal 10 via the communication interface 54. The approval response command is wirelessly transmitted from the access point 70 via the network 2 and received by the information terminal 10 that is the login command transmission source. Then, the processor 51 ends the login command reception processing.

Referring back to FIG. 7, the processor 11 of the information terminal 10 which has transmitted the login command in ACT 3, waits for a response command from the virtual POS server 50 in ACT 4. Upon receipt of the disapproval response command from the virtual POS server 50, the processor 11 determines NO in ACT 4 and returns to ACT 2. Therefore, the user performs login again.

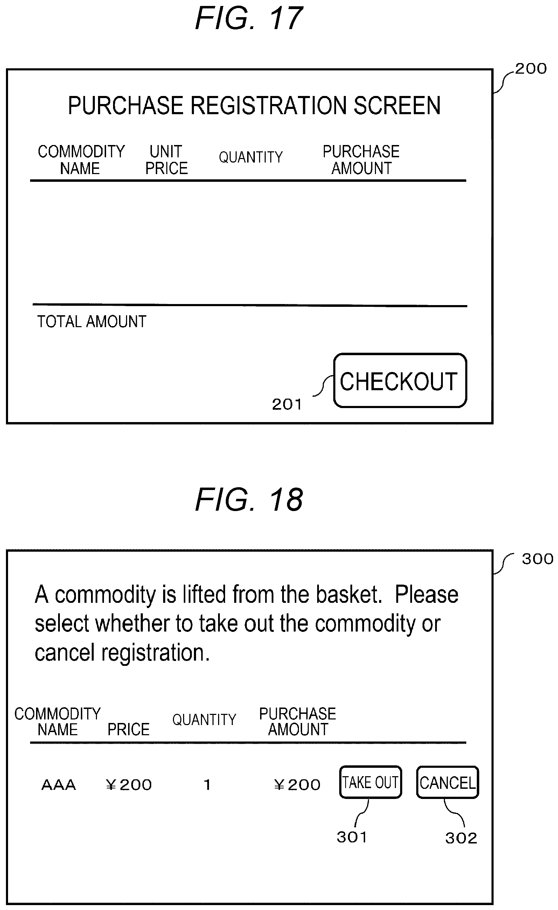

Upon receipt of the approval response command from the virtual POS server 50, the processor 11 determines YES in ACT 4 and proceeds to ACT 5. In ACT 5, the processor 11 stores the member ID included in the approval response command in the main memory 12. In ACT 6, the processor 11 causes the touch panel 15 to display a purchase registration screen 200 (see FIG. 17).

FIG. 17 is a schematic diagram illustrating an example of the purchase registration screen 200. As illustrated in FIG. 17, regions for displaying the commodity name, the unit price, the quantity, and the purchase amount of a purchase-registered commodity and a total amount are formed on the purchase registration screen 200. An image of a checkout button 201 for starting checkout is displayed.

The user checks the purchase registration screen 200, walks around a selling floor, and stores a purchased commodity in the cart 100. For example, the user puts the purchased commodity in the shopping basket 150 placed on the basket receiving section 140. Before putting the purchased commodity in the shopping basket 150, the user operates the scanner 18 and reads a barcode attached to the purchased commodity.

Referring back to FIG. 7, in ACT 7, the processor 11 determines whether the barcode of the purchased commodity is read by the scanner 18. Upon determining that the barcode of the purchased commodity is read by the scanner 18, the processor 11 determines YES in ACT 7 and proceeds to ACT 10.

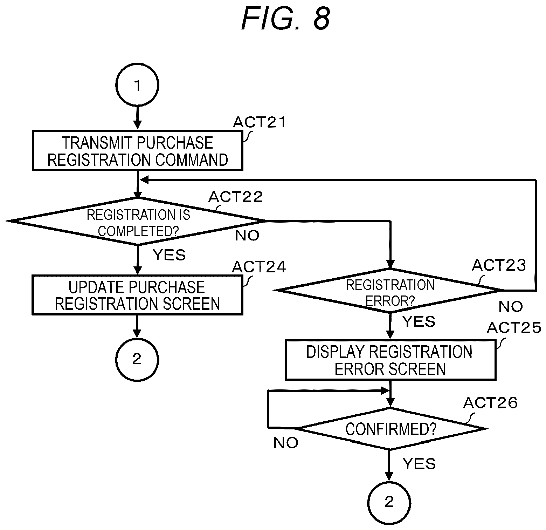

In ACT 10, the processor 11 determines, with the function of the increase detecting unit 111, whether a total weight output by the scale 21 increases. For example, if the user puts the purchased commodity, the barcode of which has been read, in the shopping basket 150, the total weight output by the scale 21 increases. At this time, if an increase amount of the total weight output by the scale 21 is equal to or larger than a predetermined value, the processor 11 determines that the total weight output by the scale 21 increases. The predetermined value is set in order to ignore changes in the total weight caused by vibration of the cart 100. If the total weight increases, the processor 11 determines YES in ACT 10 and proceeds to ACT 21 in FIG. 8 . The barcode of the purchased commodity is read by the scanner 18 and the total weight output by the scale 21 increases, which means that the commodity identified by the commodity code represented by the barcode is registered and stored in the shopping basket 150.

In ACT 21, the processor 11 controls the wireless unit 14 to transmit a purchase registration command to the virtual POS server 50. According to this control, the wireless unit 14 wirelessly transmits the purchase registration command to the virtual POS server 50. The purchase registration command is received by the access point 70 and transmitted to the virtual POS server 50 via the network 2. The purchase registration command includes the member ID stored in the main memory 12, the commodity code of the purchased commodity, and the increase amount of the total weight.

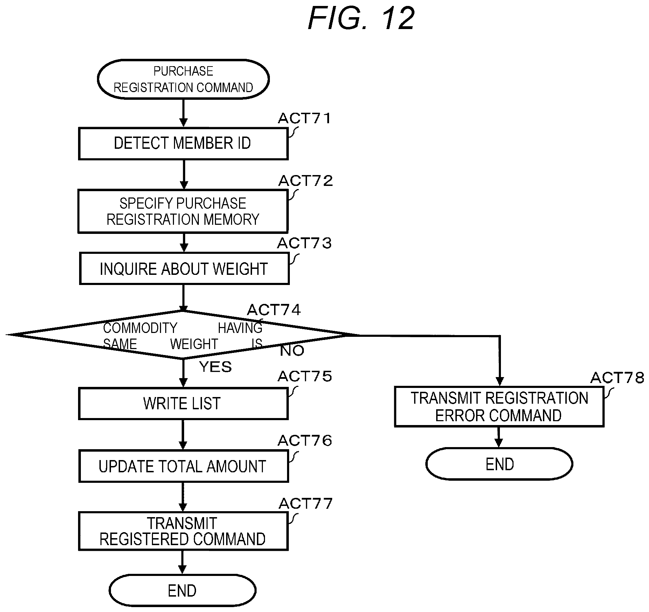

Upon receipt of the purchase registration command, the processor 51 of the virtual POS server 50 starts command reception processing illustrated in the flowchart of FIG. 12.

In ACT 71, the processor 51 detects the member ID from the purchase registration command. In ACT 72, the processor 51 specifies, as a processing target, the purchase registration memory 521 in which the detected member ID is stored.

In ACT 73, the processor 51 inquires the store server 30 whether the same set weight as the increase amount of the total weight included in the purchase registration command is present in the commodity data record correlated with the commodity code included in the purchase registration command. At this time, if a difference between the set weight and the increase amount of the total weight is equal to or smaller than an allowable value, the store server 30 determines that the set weight and the increase amount are the same.

If a response indicating that the commodity data record including the same set weight as the increase amount of the total weight is present in the commodity database is received from the store server 30, in ACT 74, the processor 51 determines YES in ACT 74 and proceeds to ACT 75.

In ACT 75, the processor 51 generates the purchased commodity list 522 based on the commodity code with the function of the registration processing unit 511 and writes the purchased commodity list 522 into the purchase registration memory 521. In ACT 76, the processor 51 updates the total amount in the purchase registration memory 521 by adding a purchase amount in the purchased commodity list 522 written anew.

In ACT 77, the processor 51 controls the communication interface 54 to transmit a registration completion command to the information terminal 10. According to this control, the registration completion command is transmitted to the information terminal 10 via the communication interface 54. The registration completion command is wirelessly transmitted from the access point 70 via the network 2 and received by the information terminal 10 that is the purchase registration command transmission source. The registration completion command includes the member ID and the purchased commodity list 522. Then, the processor 51 ends the purchase registration command reception processing.

If a response indicating that the commodity data record including the same set weight as the increase amount is absent in the commodity database is received from the store server 30, the processor 51 determines NO in ACT 74 and proceeds to ACT 78. In ACT 78, the processor 51 controls the communication interface 54 to transmit a registration error command to the information terminal 10. According to this control, the registration error command is transmitted to the information terminal 10 via the communication interface 54. The registration error command is wirelessly transmitted from the access point 70 via the network 2 and received by the information terminal 10 that is the weight decrease command transmission source. The registration error command includes screen data of a registration error screen. The registration error screen is explained later. Then, the processor 51 ends the purchase registration command reception processing.

Referring back to FIG. 8, the processor 11 of the information terminal 10, which has transmitted the purchase registration command in ACT 21, waits for the registration completion command from the virtual POS server 50 in ACT 22. Upon receipt of the registration completion command from the virtual POS server 50, the processor 11 determines YES in ACT 22 and proceeds to ACT 24.

In ACT 24, the processor 11 updates the purchase registration screen 200. That is, the processor 11 updates the purchase registration screen 200 such that a commodity name, a unit price, a quantity, and a purchase amount of a newly-registered commodity are displayed and the total amount reflects the purchase amount of that commodity. The processor 11 returns to ACT 7 in FIG. 7.

If the registration completion command is not received from the virtual POS server 50, e.g., within a predetermined time period, the processor 11 determines NO in ACT 22 and proceeds to ACT 23. In ACT 23, the processor 11 determines whether the registration error command is received. If the registration error command is not received, e.g., within a predetermined time period, the processor 11 determines NO in ACT 23 and returns to ACT 22. That is, the processor 11 returns to the waiting state in ACT 22 to ACT 23.

If the registration error command is received, the processor 11 determines YES in ACT 23 and proceeds to ACT 25. In ACT 25, the processor 11 causes the touch panel 15 to display the registration error screen. The registration error screen is, for example, a screen for notifying the user that the registration of the purchased commodity is normally performed. An image of a confirmation button is displayed on the registration error screen.

In ACT 26, the processor 11 determines whether the confirmation button displayed on the registration error screen is touched. If the confirmation button is touched, the processor 11 determines YES in ACT 26 and returns to ACT 7 in FIG. 7.

Referring back to FIG. 7, if the barcode of the purchased commodity is not read by the scanner 18, the processor 11 determines NO in ACT 7 and proceeds to ACT 8. In ACT 8, the processor 11 determines, with the function of the decrease detecting unit 112, whether the total weight output by the scale 21 decreases. For example, if the user lifts an already registered purchased commodity from the shopping basket 150, the total weight output by the scale 21 decreases. At this time, if the decrease amount of the total weight output by the scale 21 is equal to or larger than a predetermined value, the processor 11 determines that the total weight output by the scale 21 decreases. The predetermined value is set in order to ignore the weight changes caused by vibration of the cart 100. If the total weight output by the scale 21 decreases, the processor 11 determines YES in ACT 8 and proceeds to ACT 11. The total weight output by the scale 21 decreases in this way, which means that the purchased commodity is lifted from the shopping basket 150.

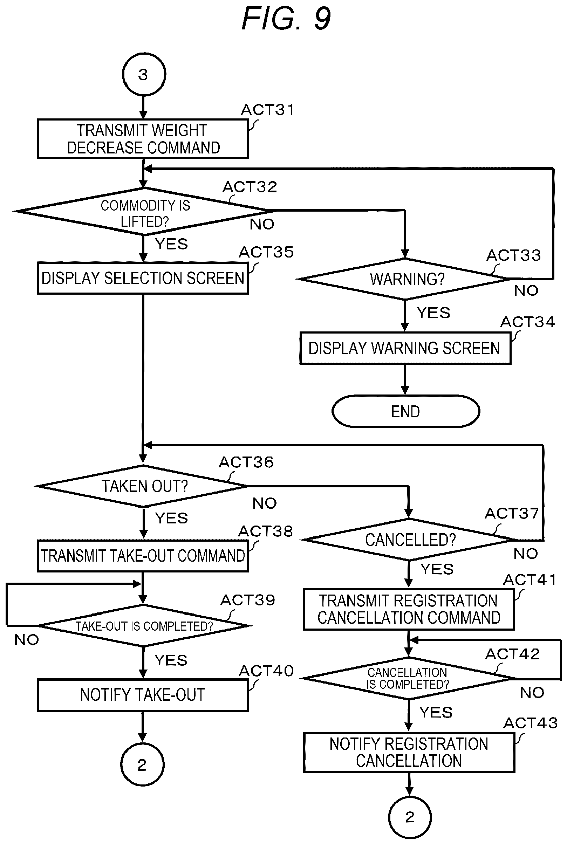

In ACT 11, the processor 11 determines whether the barcode of the purchased commodity is read by the scanner 18. Upon determining that the barcode of the purchased commodity is read by the scanner 18, the processor 11 determines YES in ACT 11 and proceeds to ACT 31 in FIG. 9.

In ACT 31, the processor 11 controls the wireless unit 14 to transmit a weight decrease command to the virtual POS server 50. According to this control, the wireless unit 14 wirelessly transmits the weight decrease command to the virtual POS server 50. The weight decrease command is received by the access point 70 and transmitted to the virtual POS server 50 via the network 2. The weight decrease command includes the member ID stored in the main memory 12, the commodity code of the purchased commodity, and the decrease amount of the total weight.

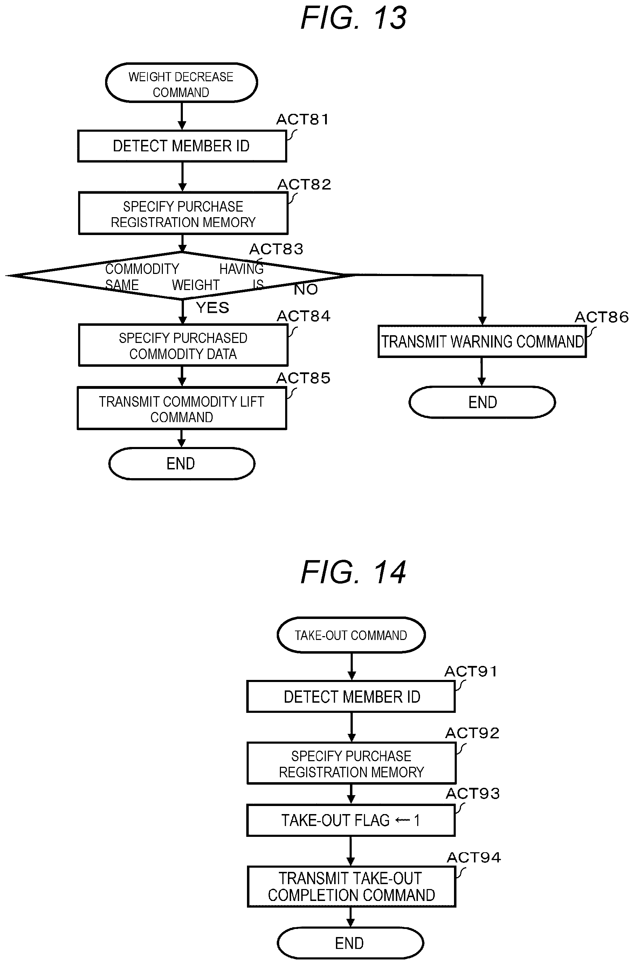

Upon receipt of the weight decrease command, the processor 51 of the virtual POS server 50 starts command reception processing illustrated in the flowchart of FIG. 13.

In ACT 81, the processor 51 detects the member ID from the weight decrease command. In ACT 82, the processor 51 specifies, as a processing target, the purchase registration memory 521 in which the member ID is stored.

In ACT 83, the processor 51 determines whether the weight written in the same row as the commodity code included in the weight decrease command in the purchased commodity list 522 of the purchase registration memory 521 is the same as the decrease amount of the total weight included in the weight decrease command. At this time, if a difference between the weight in the purchased commodity list 522 and the decrease amount is equal to or smaller than an allowable value, the processor 51 determines that the weight in the purchased commodity list 522 and the decrease amount are the same. If the same weight as the decrease amount is written in the purchased commodity list 522, the processor 51 determines YES in ACT 83 and proceeds to ACT 84.

In ACT 84, the processor 51 specifies purchased commodity data in which the same weight as the decrease amount is written from the purchased commodity list 522. In ACT 85, the processor 51 controls the communication interface 54 to transmit a commodity lift command to the information terminal 10. According to this control, the commodity lift command is transmitted to the information terminal 10 via the communication interface 54. The commodity lift command is wirelessly transmitted from the access point 70 via the network 2 and received by the information terminal 10 that is the weight decrease command transmission source. The commodity lifted command includes the member ID and the purchased commodity data in which the same weight as the decrease amount is written. Then, the processor 51 ends the weight decrease command reception processing.

On the other hand, if the same weight as the decrease amount is not written in the purchased commodity list 522, the processor 51 determines NO in ACT 83 and proceeds to ACT 86. In ACT 86, the processor 51 controls the communication interface 54 to transmit a warning command to the information terminal 10. According to the control, the warning command is transmitted to the information terminal 10 via the communication interface 54. The warning command is wirelessly transmitted from the access point 70 via the network 2 and received by the information terminal 10 that is the weight decrease command transmission source. The warning command includes screen data of a warning screen. The warning screen is explained later. Then, the processor 51 ends the weight decrease command reception processing.

Referring back to FIG. 9, the processor 11 of the information terminal 10, which has transmitted the weight decrease command in ACT 31, waits for the commodity lift command from the virtual POS server 50 in ACT 32. If the commodity lift command is not received from the virtual POS server 50, e.g., within a predetermined time period, the processor 11 determines NO in ACT 32 and proceeds to ACT 33.

In ACT 33, the processor 11 determines whether the warning command is received from the virtual POS server 50. If the warning command is not received, the processor 11 determines NO in ACT 33 and returns to ACT 32. That is, the processor 11 returns to the waiting state in ACT 32 to ACT 33.

If the warning command is received, the processor 11 determines YES in ACT 33 and proceeds to ACT 34. In ACT 34, the processor 11 causes the touch panel 15 to display a warning screen. The warning screen is, for example, a screen for notifying that fraudulent operation is performed. Then, the processor 11 ends the information processing illustrated in the flowcharts of FIGS. 7 and 9.

If the commodity lift command is received, the processor 11 determines YES in ACT 32 and proceeds to ACT 35. In ACT 35, the processor 11 causes the touch panel 15 to display a selection screen 300 (see FIG. 18).

FIG. 18 is a schematic diagram illustrating an example of the selection screen 300. The selection screen 300 is a screen for selecting whether to take out a purchased commodity lifted from the shopping basket 150 or cancel registration of the purchased commodity. As illustrated in FIG. 18, text data for inquiring whether to take out a purchased commodity lifted from the shopping basket 150 or cancel registration of the purchased commodity is displayed on the selection screen 300. In the selection screen 300, regions for displaying the commodity name, the unit price, the quantity, and the purchase amount of the registered commodity lifted from the shopping basket 150 are formed. An image of a take-out button 301 and an image of a cancellation button 302 are displayed on the selection screen 300. The user touches the take-out button 301 if the user takes out the purchased commodity from the shopping basket 150. The user touches the cancellation button 302 if the user cancels registration of the purchased commodity. The text displayed in FIG. 18 is an example.

Referring back to FIG. 9, in ACT 36, the processor 11 determines whether the take-out button 301 of the selection screen 300 is touched. If the take-out button 301 is touched, the processor 11 determines YES in ACT 36 and proceeds to ACT 38.

In ACT 38, the processor 11 controls the wireless unit 14 to transmit a take-out command to the virtual POS server 50. According to this control, the wireless unit 14 wirelessly transmits the take-out command to the virtual POS server 50. The take-out command is received by the access point 70 and transmitted to the virtual POS server 50 via the network 2. The take-out command includes the member ID stored in the main memory 12 and the commodity code of the purchased commodity for which the take-out button 301 is touched.

The processor 51 of the virtual POS server 50 acquires the take-out command with the function of the receiving unit 512. Then, the processor 51 starts command reception processing illustrated in the flowchart of FIG. 14.

In ACT 91, the processor 51 detects the member ID from the take-out command. In ACT 92, the processor 51 specifies, as a processing target, the purchase registration memory 521 in which the member ID is stored.

In ACT 93, the processor 51 updates, with the function of the updating unit 513, the take-out flag present in the same row as the commodity code included in the take-out command from "0" to "1" in the purchased commodity list 522 of the purchase registration memory 521.

In ACT 94, the processor 51 controls the communication interface 54 to transmit a take-out completion command to the information terminal 10. According to this control, the take-out completion command is transmitted to the information terminal 10 via the communication interface 54. The take-out completion command is wirelessly transmitted from the access point 70 via the network 2 and received by the information terminal 10 that is the take-out command transmission source. The take-out completion command includes the member ID, the purchased commodity list 522, and image data of a take-out display image. The take-out display image is explained later. Then, the processor 51 ends the take-out command reception processing.

Referring back to FIG. 9, the processor 11 of the information terminal 10, which has transmitted the take-out command in ACT 38, waits for the take-out completion command from the virtual POS server 50 in ACT 39. Upon receipt of the take-out completion command from the virtual POS server 50, the processor 11 determines YES in ACT 39 and proceeds to ACT 40. In ACT 40, the processor 11 notifies of the take-out of the purchased commodity with the function of the first notifying unit 113. Specifically, the processor 11 causes the touch panel 15 to display the purchase registration screen 200 on which the take-out of the purchased commodity is notified. The processor 11 returns to ACT 7 in FIG. 7.

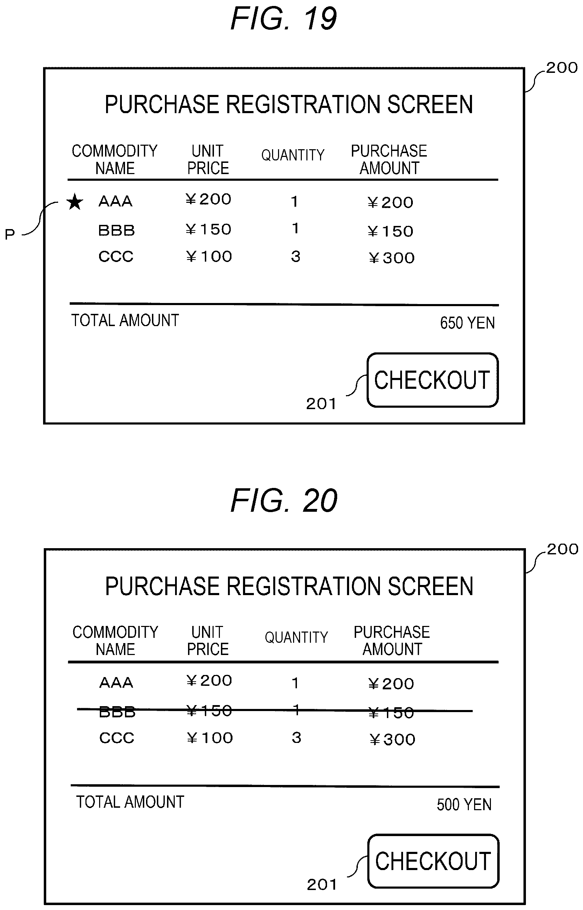

FIG. 19 is a schematic diagram illustrating an example of the purchase registration screen 200 on which the take-out of the purchased commodity is notified. As illustrated in FIG. 19, a take-out display image P is displayed on the purchase registration screen 200. The take-out display image P is an image for specifying a purchased commodity that the user has taken out from the shopping basket 150 (hereinafter referred to as a taken-out commodity). The take-out display image P is displayed in association with the taken-out commodity displayed on the purchase registration screen 200. The take-out display image P is not limited to the example shown in FIG. 19 and any image may be used to identify the taken-out commodity. The text shown in FIG. 19 is an example.

Referring back to FIG. 9, if the take-out button 301 of the selection screen 300 is not touched, the processor 11 determines NO in ACT 36 and proceeds to ACT 37. In ACT 37, the processor 11 determines whether the cancellation button 302 is touched. If the cancellation button 302 is not touched, the processor 11 determines NO in ACT 37 and returns to ACT 36. That is, the processor 11 returns to the waiting state in ACT 36 to ACT 37.

If the cancellation button 302 of the selection screen 300 is touched, the processor 11 determines YES in ACT 37 and proceeds to ACT 41.

In ACT 41, the processor 11 controls the wireless unit 14 to transmit a registration cancellation command to the virtual POS server 50. According to this control, the wireless unit 14 wirelessly transmits the registration cancellation command to the virtual POS server 50. The registration cancellation command is received by the access point 70 and transmitted to the virtual POS server 50 via the network 2. The registration cancellation command includes the member ID stored in the main memory 12 and a commodity code of a purchased commodity, registration of which is to be cancelled.

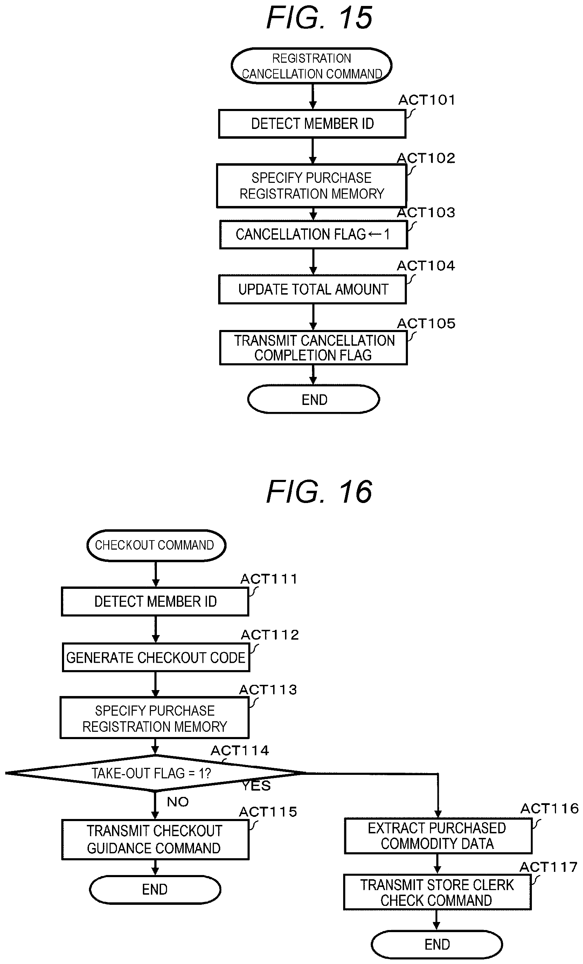

The processor 51 of the virtual POS server 50 acquires the registration cancellation command with the function of the receiving unit 512. Then, the processor 51 starts command reception processing in a procedure illustrated in the flowchart of FIG. 15.

In ACT 101, the processor 51 detects the member ID from the registration cancellation command. In ACT 102, the processor 51 specifies, as a processing target, the purchase registration memory 521 in which the member ID is stored.

In ACT 103, the processor 51 updates the cancellation flag present in the same row as the commodity code included in the registration cancellation command from "0" to "1" in the purchased commodity list 522 of the purchase registration memory 521. In ACT 104, the processor 51 updates the total amount of the purchase registration memory 521 by subtracting a purchase amount of a commodity, purchase registration of which is being cancelled from the total amount.

In ACT 105, the processor 51 controls the communication interface 54 to transmit a cancellation completion command to the information terminal 10. According to this control, the cancellation completion command is transmitted to the information terminal 10 via the communication interface 54. The cancellation completion command is wirelessly transmitted from the access point 70 via the network 2 and received by the information terminal 10 that is the registration cancellation command transmission source. The cancellation completion command includes the member ID and the purchased commodity list 522. Then, the processor 51 ends the registration cancellation command reception processing.

Referring back to FIG. 9, the processor 11 of the information terminal 10, which has transmitted the registration cancellation command in ACT 41, waits for the cancellation completion command from the virtual POS server 50 in ACT 42. Upon receipt of the cancellation completion command from the virtual POS server 50, the processor 11 determines YES in ACT 42 and proceeds to ACT 43. In ACT 43, the processor 11 notifies of the registration cancellation of the purchased commodity with the function of the second notifying unit 114. Specifically, the processor 11 causes the touch panel 15 to display the purchase registration screen 200 on which the registration cancellation of the purchased commodity is notified. The processor 11 returns to ACT 7 in FIG. 7.

FIG. 20 is a schematic diagram illustrating an example of the purchase registration screen 200 on which the registration cancellation of the purchased commodity is notified. As illustrated in FIG. 20, a cross-out line is displayed on the commodity name, the unit price, the quantity, and the purchase amount of a commodity, purchase registration of which has been cancelled on the purchase registration screen 200. The total amount on the purchase registration screen 200 is displayed, which is obtained by subtracting the purchase amount of the cancelled commodity from the total amount. The text shown in FIG. 20 is an example.

Referring back to FIG. 7, if the weight output by the scale 21 does not decrease, the processor 11 determines NO in ACT 8 and proceeds to ACT 9. In ACT 9, the processor 11 determines whether checkout processing is started.

As explained above, an image of the checkout button 201 is displayed in the purchase registration screen 200. The user finishes purchase and touches the checkout button 201. If the checkout button 201 is touched, the processor 11 determines that checkout processing is started. If checkout is not started, the processor 11 determines NO in ACT 9 and returns to ACT 7. That is, the processor 11 returns to the waiting state in ACT 7 to ACT 9.

If checkout processing is started, the processor 11 determines YES in ACT 9 and proceeds to ACT 51 in FIG. 10. In ACT 51, the processor 11 controls the wireless unit 14 to transmit a checkout command to the virtual POS server 50. According to this control, the wireless unit 14 wirelessly transmits the checkout command to the virtual POS server 50. The checkout command is received by the access point 70 and transmitted to the virtual POS server 50 via the network 2. The checkout command includes the member ID stored in the main memory 12.

The processor 51 of the virtual POS server 50 acquires the checkout command and starts command reception processing illustrated in the flowchart of FIG. 16.

In ACT 111, the processor 51 detects the member ID from the checkout command. In ACT 112, the processor 51 generates data of a checkout code. The checkout code is a code for identifying a user who performs checkout using the checkout machine 60. The checkout code is generated for each user who performs checkout using the checkout machine 60.

In ACT 113, the processor 51 specifies, as a processing target, the purchase registration memory 521 in which the member ID detected in the processing in ACT 111 is stored. In ACT 114, the processor 51 determines whether purchased commodity data, the take-out flag of which is "1", is present in the purchased commodity list 522. If purchased commodity data, the take-out flag of which is "1", is absent, the processor 51 determines NO in ACT 114 and proceeds to ACT 115.

In ACT 115, the processor 51 controls the communication interface 54 to transmit a checkout guidance command to the information terminal 10. According to this control, the checkout guidance command is transmitted to the information terminal 10 via the communication interface 54. The checkout guidance command is wirelessly transmitted from the access point 70 via the network 2 and received by the information terminal 10 that is the checkout command transmission source. The checkout guidance command includes image data of a checkout barcode representing the checkout code generated in ACT 112. Then, the processor 51 ends the checkout command reception processing.

On the other hand, if purchased commodity data, the take-out flag of which is "1", is present, the processor 51 determines YES in ACT 114 and proceeds to ACT 116. In ACT 116, the processor 51 specifies the purchased commodity data, the take-out flag of which is "1", from the purchased commodity list 522.

In ACT 117, the processor 51 controls the communication interface 54 to transmit a store clerk check command to the information terminal 10. According to this control, the store clerk check command is transmitted to the information terminal 10 via the communication interface 54. The store clerk check command is wirelessly transmitted from the access point 70 via the network 2 and received by the information terminal 10 that is the checkout command transmission source. The store clerk check command includes the image data of the checkout barcode representing the checkout code generated in ACT 112 and the purchased commodity data, the take-out flag of which is "1". Then, the processor 51 ends the checkout command reception processing.

Referring back to FIG. 10, the processor 11 of the information terminal 10, which has transmitted the checkout command in ACT 51, waits for the checkout guidance command from the virtual POS server 50 in ACT 52. Upon receipt of the checkout guidance command from the virtual POS server 50, the processor 11 determines YES in ACT 52 and proceeds to ACT 53.

In ACT 53, the processor 11 causes the touch panel 15 to display a checkout guidance screen. On the checkout guidance screen, for example, the checkout barcode and a message for urging the checkout barcode to be scanned by the checkout machine 60 are displayed. Then, the processor 11 ends the information processing illustrated in the flowcharts of FIGS. 7 to 10.

If the checkout guidance command is not received from the virtual POS server 50, the processor 11 determines NO in ACT 52 and proceeds to ACT 53. In ACT 53, the processor 11 determines whether the store clerk check command is received. If the store clerk check command is not received, the processor 11 determines NO in ACT 53 and returns to ACT 52. That is, the processor 11 returns to the waiting state in ACT 52 to ACT 53.

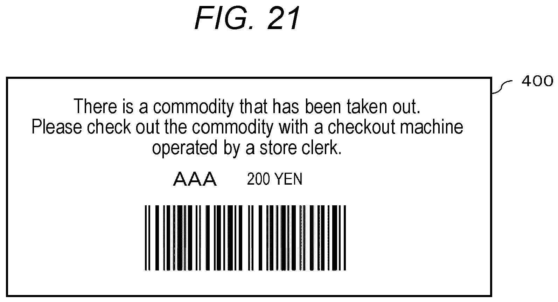

Upon receipt of the store clerk check command, the processor 11 determines YES in ACT 54 and proceeds to ACT 55. In ACT 55, the processor 11 notifies of, with the function of the third notifying unit 115, settlement by the full-service checkout machine 601. Specifically, the processor 11 causes the touch panel 15 to display a store clerk check screen 400 (see FIG. 21). Then, the processor 11 ends the information processing illustrated in the flowcharts of FIGS. 7 to 10.

FIG. 21 is a schematic diagram illustrating an example of the store clerk check screen 400. As illustrated in FIG. 21, on the store clerk check screen 400, for example, the commodity name, the unit price, and the checkout barcode of a taken-out commodity and a message for urging the user to perform checkout using the full-service checkout machine 601 because of the taken-out commodity are displayed. The text and an image shown in FIG. 21 are examples.

The user who has confirmed the checkout guidance screen goes to a location where the full-service checkout machine 601 or the self-service checkout machine 602 is installed, and causes the scanner of the checkout machine 60 to read the displayed checkout barcode. Then, the data of the purchase registration memory 521, in which the checkout code of the checkout barcode is set, is transmitted to the checkout machine 60 from the virtual POS server 50. Thereafter, well-known checkout processing such as cash payment, credit card payment, or electronic money payment is executed by the checkout machine 60.

On the other hand, the user who has confirmed the store clerk check screen 400 goes to a location where the full-service checkout machine 601 is installed and presents the checkout barcode to the store clerk. The store clerk reads the checkout barcode with the scanner. Then, the data of the purchase registration memory 521, in which the checkout code of the checkout barcode is set, is transmitted to the full-service checkout machine 601 from the virtual POS server 50. On a touch panel of the full-service checkout machine 601, the take-out display image P for specifying a taken-out commodity is displayed together with, for example, the commodity name, the unit price, the quantity, and the purchase amount of each purchased commodity and a total amount. The store clerk confirms whether the user is holding the taken-out commodity, the take-out display image P of which is displayed. Thereafter, the well-known checkout processing such as cash payment, credit card payment, or electronic money payment is executed in the full-service checkout machine 601.

Therefore, in such an information processing system 1, if the total weight output by the scale 21 decreases and the barcode attached to the purchased commodity is read by the scanner 18 of the information terminal 10, the weight decrease command is transmitted to the virtual POS server 50. If the same weight as the decrease amount is stored in the purchased commodity list 522 of the virtual POS server 50, the purchased commodity data is specified as the purchased commodity lifted from the shopping basket 150. On the touch panel 15 of the information terminal 10, the selection screen 300 for selecting whether to take out the purchased commodity from the shopping basket 150 or cancel registration of the purchased commodity is displayed. If the user touches the take-out button 301 in order to take out the purchased commodity from the shopping basket 150, the take-out command including the member ID and the commodity code is transmitted to the virtual POS server 50. The take-out flag of the purchased commodity list 522 of the virtual POS server 50 is updated. If the user touches the cancellation button 302 in order to cancel the registration of the purchased commodity, the cancellation command including the member ID and the commodity code is transmitted to the virtual POS server 50. The cancellation flag of the purchased commodity list 522 of the virtual POS server 50 is updated. Therefore, even if a purchased commodity is lifted from the shopping basket 150, it is not determined that a fraudulent act has been committed if the purchased commodity for which registration is normally ended is taken out from the shopping basket 150 or if the registration of the purchased commodity is cancelled.

If the take-out button 301 of the selection screen 300 is touched, the take-out display image P is displayed for specifying the taken-out commodity, which is the purchased commodity taken out from the shopping basket 150 by the user, on the purchase registration screen 200 displayed on the touch panel 15 of the information terminal 10. Therefore, the user or the store clerk can easily identify the taken-out commodity with the display of the take-out display image P.

If the cancellation button 302 of the selection screen 300 is touched, a cross-out line is displayed over a purchased commodity, the registration of which has been cancelled by the user, on the purchase registration screen 200 displayed on the touch panel 15 of the information terminal 10. Therefore, the user or the store clerk can easily identify the cancelled commodity with the display of the cross-out line.

If a taken-out commodity is further present, the store clerk check screen 400 including a message for urging the user to perform checkout processing using the full-service checkout machine 601. Therefore, a store clerk can check the taken-out commodity without automatically determining that the user commits a fraudulent act.

Embodiments of the information processing system 1, the control program therefor, and the information processing method are explained, but are not limited to the ones explained above.

In the above embodiments, the information terminal 10 attached to the cart 100 is illustrated. The information terminal 10 does not always have to be attached to the cart 100. For example, a smartphone, a tablet terminal, or the like carried by a customer may be used as the information terminal 10.

In the above embodiments, the total weight output by the scale 21 decreases, for example, if a purchased commodity is lifted from the shopping basket 150. The total weight output by the scale 21 increases, for example, if the barcode of a purchased commodity is read by the scanner 18 and the commodity identified by the commodity code represented by the barcode is registered and stored in the shopping basket 150. For example, a reader-writer may be attached to the shopping basket 150. In such a case, a wireless tag is attached to each commodity sold at the store. The wireless tag is, for example, an RFID tag. The wireless tag may store history data of movement of the commodity, for example, put in the shopping basket 150 or lifted from the shopping basket 150.

In the above embodiments, the registration error screen or the warning screen is displayed on the touch panel 15. A registration error may be notified by, for example, a warning sound.

In the above embodiments, the weight in the purchased commodity list 522 is, for example, the set weight included in the commodity data record stored in the commodity database. For example, the weight in the purchased commodity list 522 may be an increase amount or a decrease amount of the total weight output by the scale 21.

In the above embodiments, the processor 11 of the information terminal 10 performs the functions of the increase detecting unit 111, the decrease detecting unit 112, the first notifying unit 113, the second notifying unit 114, and the third notifying unit 115. The processor 51 of the virtual POS server 50 performs the functions of the registration processing unit 511, the receiving unit 512, and the updating unit 513. For example, the processor 51 may perform the functions of the increase detecting unit 111 and the decrease detecting unit 112. For example, the processor 11 may perform the function of the receiving unit 512.

Further, in the above embodiments, the purchase registration memory 521 is formed in the main memory 52 of the virtual POS server 50. For example, the purchase registration memory 521 may be formed in the main memory 12 of the information terminal 10. In such a case, the processor 11 may perform the functions of the receiving unit 512 and the updating unit 513.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined in the appended claims. The accompanying claims and their equivalents are intended to cover such forms or modifications as would fall within the scope of the inventions.

## Claims

1. A point of sales (POS) system, comprising:
a POS terminal configured to scan a commodity and acquire a commodity code from the commodity by the scanning;
a POS server configured to receive the commodity code from the POS terminal and register the commodity code in a memory in association with a preset weight for the commodity; and
a scale configured to measure a total weight of commodities in a shopping cart, wherein
the POS terminal is connected to the scale and configured to detect a decrease in the total weight and transmit an amount of the decrease to the POS server, and
the POS server is further configured to:
upon receipt of the amount of the decrease, determine whether a matching commodity code associated with a weight that is substantially identical to the amount of the decrease is already registered in the memory, and
upon determining that the matching commodity code is already registered, issue a first command that causes the POS terminal to display a first screen through which a user can input either a first input indicating that the commodity corresponding to the matching commodity code has been taken out from the shopping cart or a second input indicating that the registration of the commodity corresponding to the matching commodity code is to be cancelled.

2. The POS system according to claim 1, wherein the POS server is further configured to, upon receipt of the first input, issue a second command that causes the POS terminal to display a second screen indicating that the commodity corresponding to the matching commodity code has been taken out of the shopping cart.

3. The POS system according to claim 1 or 2, wherein the POS server is further configured to, upon receipt of the first input, store in the memory a flag indicating that the commodity corresponding to the matching commodity code has been taken out from the shopping cart.

4. The POS system according to claim 3, wherein
the POS terminal is further configured to receive a third input for starting checkout processing, and
the POS server is further configured to, upon receipt of the third input, when the flag is stored in the memory, issue a third command that causes the POS terminal to display a third screen including a checkout code for the checkout processing and a message indicating that the checkout processing should be performed through a checkout machine that is operated by a store clerk.

5. The POS system according to claim 4, wherein the POS server is further configured to, upon receipt of the third input, when the flag is not stored in the memory, issue a fourth command that causes the POS terminal to display a fourth screen including the checkout code without the message.

6. The POS system according to any of claims 1 to 5, wherein the POS server is further configured to, upon receipt of the second input, cancel the registration of the commodity corresponding to the matching commodity code.

7. The POS system according to claim 6, wherein the POS server is further configured to, after cancelling the registration of the commodity corresponding to the matching commodity code, issuing a fifth command that causes the POS terminal to display a fifth screen indicating that the registration has been cancelled.

8. The POS system according to any of claims 1 to 7, wherein the POS terminal is further configured to, when a commodity code of a commodity is registered, display a commodity name, a unit price, a quantity, and a purchase amount of the commodity.

9. The POS system according to claim 8, wherein the POS terminal is further configured to, when a registered commodity is taken out from the shopping cart, display an image that identifies the registered commodity removed from the shopping cart.

10. The POS system according to claim 8 or 9, wherein the POS terminal is further configured to, when the registered commodity is cancelled, display a line over the commodity name, the unit price, the quantity, and the purchase amount of the commodity.

11. The POS system according to any of claims 1 to 10, wherein the POS terminal is attached to the shopping cart.

12. The POS system according to claim 11, further comprising:
a scanner attached to a handle bar of the shopping cart.

13. A commodity registration method for a point of sales (POS) system including a POS terminal and a POS server, the method comprising:
acquiring a commodity code from scanning of a commodity at a POS terminal;
transmitting the commodity code from the POS terminal to a POS server;
upon receipt of the commodity code by the POS server, registering the commodity code in a memory in association with a preset weight for the commodity;
measuring a total weight of commodities in a shopping cart using a scale mounted on the shopping cart;
detecting a decrease in the total weight and an amount of the decrease;
transmitting the amount of the decrease in the total weight to the POS server from the POS terminal;
upon receipt of the amount of the decrease by the POS server, determining whether a matching commodity code associated with a weight that is substantially identical to the amount of the decrease is already registered in the memory; and
upon determining that the matching commodity code is registered, issuing a first command that causes the POS terminal to display a first screen permitting a user to input either a first input indicating that the commodity corresponding to the matching commodity code has been taken out from the shopping cart or a second input indicating that the registration of the commodity corresponding to the matching commodity code is to be cancelled.

14. The commodity registration method according to claim 13, further comprising:
upon receipt of the first input, by the POS server, issuing a second command that causes the POS terminal to display a second screen indicating that the commodity corresponding to the matching commodity code has been taken out.

15. A non-transitory computer readable medium storing program instructions for causing a point of sales (POS) system including a POS server and a POS terminal to execute a commodity registration method comprising:
acquiring a commodity code of a commodity at a POS terminal;
transmitting the commodity code to the POS server from a POS terminal;
upon receipt of the commodity code at the POS server, registering in a memory the commodity code in association with a preset weight of the commodity;
measuring a total weight of commodities in a shopping cart by a scale;
detecting a decrease in the total weight at the POS terminal;
transmitting an amount of the decrease to the POS server from the POS terminal;
upon receipt of the amount of the decrease at the POS server, determining whether a matching commodity code associated with a weight that is substantially identical with the amount of the decrease is already registered in the memory; and
upon determining that the matching commodity code is already registered, issuing a first command that causes the POS terminal to display a first screen through which a user can input either a first input indicating that the commodity corresponding to the matching commodity code has been taken out from the shopping cart or a second input indicating that the registration of the commodity corresponding to the matching commodity code is to be cancelled.
